# FASCICULE DE BREVET EUROPEEN

(11) **EP 0 486 084 B1**
(45) Date de publication et mention de la délivrance du brevet: **24.05.1995**
(21) Numéro de dépôt: 91202842.0
(22) Date de dépôt: 01.11.1991
(51) Int. Cl.: F16K 11/074, F16K 27/04

(54) **Cartouche pour robinet mélangeur, ayant un fond intérieur à effet hydraulique**
Kartusche für Mischbatterie mit einem hydraulisch ansprechbaren Innenboden
Cartridge for a mixing valve having a hydraulic responsive internal bottom

(30) Priorité: 16.11.1990 IT 6789490
(43) Date de publication de la demande: 20.05.1992
(73) Titulaire: STUDIO TECNICO SVILUPPO E RICERCHE S.T.S.R. s.r.l., I-46025 Poggio Rusco (Mantova) (IT)
(72) Inventeur: Knapp, Francesco, I-27100 Pavia (IT)
(74) Mandataire: Patrito, Pier Franco, Dr. Ing.

(56) Documents cités:
- WO-A-86/03568
- GB-A- 2 158 554
- GB-A- 2 192 256

## Description

Cette invention a pour objet une cartouche destinée à être insérée dans une chambre du corps d'un robinet hydraulique mélangeur pour eau chaude et froide, cette cartouche comprenant une cage, des moyens d'étanchéité prévus pour agir vers le fond de la chambre du corps du robinet, une plaque fixe en matériau dur montée en une position opérativement fixe dans la cage, au moins une plaque mobile en matériau dur montée en position opérativement réglable dans la cage, en contact avec ladite plaque fixe, lesdites plaques ayant des conformations mutuellement coopérant pour régler le débit du robinet et le rapport de mélange entre l'eau chaude et froide, et des moyens de commande destinés à effectuer le déplacement de ladite plaque mobile pour permettre l'execution des réglages.

Dans les formes traditionnelles, ces cartouches sont serrées dans la chambre du corps du robinet moyennant une douille constituant le couvercle du corps ou moyennant des vis, et les moyens d'étanchéité destinés à agir contre le fond de la chambre du corps du robinet sont serrés entre ce fond et la plaque fixe, de sorte que la pression de serrage de la cartouche fournit en même temps la compression des moyens d'étanchéité et une pression identique appliquée entre la plaque fixe et la plaque mobile de la cartouche. Toutefois, dans la plupart des applications la compression nécessaire pour un fonctionnement correct des moyens d'étanchéité est plus grande que la pression nécessaire entre la plaque fixe et la plaque mobile, de sorte que cette dernière résulte excessive; elle s'oppose sans avantage au fonctionnement du robinet et en augmente l'usure. De plus, les dilatations thermiques font encore accroître cette pression, en augmentant les inconvénients et conduisant aussi au possible blocage du robinet.

Dans certaines cartouches perfectionnées, les ainsi-dites cartouches à effet hydraulique, qui sont connues par exemple par le brevet US-A-4 733 694 ou GB-A-2 158 554, cet inconvénient est éliminé en pourvoyant la cage de la cartouche de accords faisant saillie, lesquels engagent par des moyens radiaux d'étanchéité en des cavités correspondantes du fond de la chambre du corps du robinet, et en installant la cartouche dans la chambre du corps du robinet avec une certaine possibilité de déplacement axial. De cette façon la compression agissant sur les moyens radiaux d'étanchéité des raccords dépend seulement du projet des parties et elle n'affecte nullement la pression appliquée entre les plaques de la cartouche, de sorte que cette dernière pression peut être établie à une valeur optimale moyennant l'action de la pression hydraulique appliquée au robinet, ainsi que, éventuellement, de moyens élastiques de précharge. Suivant le document DE-U-87 07 068, un effet partiellement similaire est obtenu en pourvoyant la plaque fixe elle-même de raccords faisant saillie, disposés pour engager par des moyens radiaux d'étanchéité en des cavités correspondantes du fond de la chambre du corps du robinet.

Toutefois, par l'emploi de ces cartouches à effet hydraulique on peut rencontrer des autres inconvénients. En effet, les raccords faisant saillie destinés à engager dans les cavités correspondantes du fond de la chambre du corps du robinet ont un encombrement considérable qui pose des limites à la distance et à la position angulaire des sorties des conduits formés dans le corps du robinet pour l'arrivée de l'eau chaude et froide et, le cas échéant, pour l'asportation de l'eau mélangée débitée. Cela porte en certains cas à des difficultés de projet, qui habituellement ne sont pas rencontrées par l'emploi des cartouches traditionnelles. Les difficultés dérivant de l'entraxe plus important entre les raccords d'étanchéité sont encore plus graves si l'on emploie des raccords à manchon en matériau élastomérique avec des moyens élastiques de poussée, les ainsi-dits delex. Particulièrement l'on peut rencontrer des difficultés, ou même l'impossibilité, si l'on voudrait employer des cartouches à effet hydraulique en remplacement des cartouches traditionnelles dans les robinets mélangeurs existants. De plus, la nécessité de réaliser un engagement précis des raccords en saillie dans les cavités du fond de la chambre du corps du robinet demande pour ces dernières une précision d'exécution difficile à obtenir dans une production industrielle de ces cavités sujettes à usinage, et en tous cas la précision de l'engagement peut être ensuite préjugée par les dilatations thermiques qui se développent en direction radiale. Enfin, le fait qu'on doit assurer à la cartouche une possibilité de déplacement axial, de sorte que la cartouche ne peut pas être serrée dans la chambre du corps du robinet, fait en sorte que la cartouche peut se déplacer quelque peu aussi en oscillation dû aux jeux inévitables, ce qui peut comporter des inconvénients et, en tous cas, donne à l'usager une impression désagréable d'instabilité de l'appareil. L'installation de la cartouche sans serrage résulte particulièrement difficile dans les types de robinet dans lesquels la douille de fermeture du corps n'est pas pourvue d'un épaulement pour en limiter le vissage, ainsi que dans les types de robinet dans lesquels la cartouche doit être fixée par des vis.

En considération de ce qui précède, le but de la présente invention est de réaliser une cartouche du type indiqué en principe, laquelle doit réunir les avantages des cartouches traditionnelles et ceux des cartouches à effet hydraulique, c'est à dire qu'elle doit être destinée à être serrée dans la chambre du corps du robinet en réalisant une étanchéité efficace par rapport au fond de la chambre elle-même et en y demeurant retenue en une position stable, cette cartouche ne posant pas des limites particuliers pour la position des sorties des conduits pratiqués dans le corps du robinet mais, au contraire, pouvant s'adapter à leur disposition, et ne posant pas des problèmes particuliers de précision d'usinage, et malgré tout cela montrant un effet hydraulique tel à permettre de choisir une valeur optimale pour la pression appliquée entre les plaques de la cartouche, indépendamment de la compression appliquée aux moyens d'étanchéité agissant vers le fond de la chambre du corps du robinet.

Ce but est atteint, suivant la présente invention, en ce que la cage de la cartouche comprend un fond opérativement fixe, lequel comporte vers l'extérieur des moyens d'étanchéité destinés à agir entre le fond de la cartouche et le fond de la chambre du corps du robinet comme conséquence du serrage de la cartouche dans ladite chambre, et comporte vers l'intérieur des moyens de couplage coopérant avec des moyens de couplage complémentaires, opérativement solidaires de la plaque fixe de la cartouche de manière à établir le couplage hydraulique entre des conduits d'alimentation prévus dans le fond (F) de la chambre du corps du robinet et lesdites conformations de la plaque fixe; que la plaque fixe est montée dans la cage de la cartouche avec une possibilité de déplacement en direction perpendiculaire à sa surface de contact avec la plaque mobile; et que des moyens sont prévus pour appliquer à la plaque fixe une pression de contact par rapport à la plaque mobile, ces moyens étant d'un type capable de réaliser, au moins en partie, un effet hydraulique.

Grâce à cette disposition, la cartouche se comporte vers l'extérieur comme une cartouche traditionnelle, elle peut être serrée dans la chambre du corps du robinet de la façon habituelle et y demeure positivement bloquée, mais ses moyens d'étanchéité, qui sont comprimés contre le fond de la chambre du corps du robinet, déchargent leur pression sur le fond opérativement fixe de la cartouche sans affecter la plaque fixe. Cette dernière, de son côté, est poussée contre la plaque mobile par les moyens spécialement prévus à cet effet, indépendamment de la pression de serrage de la cartouche dans la chambre du corps du robinet, en réalisant au moins en partie un effet hydraulique. Les connections entre le fond de la cartouche et le fond de la chambre du corps du robinet sont réalisées de la façon traditionnelle et elles ne posent pas des problèmes de disposition et de projet; le fond de la cartouche peut être facilement pourvu lui-même de conduits capables de faire communiquer les connections qui ouvrent dans le fond de la chambre du corps du robinet, avec les moyens intérieurs de couplage avec la plaque fixe de la cartouche, lorsque la disposition desdites connections et desdits moyens de couplage n'est pas identique. Aussi dans le cas où les moyens de couplage entre le fond de la cartouche et la plaque fixe sont choisis d'un type qui demande un couplage précis, ces exigences peuvent être satisfaites, dans la réalisation des parties de la cartouche qui sont en général moulées en matière plastique, bien plus facilement que par l'usinage de cavités pratiquées dans le fond de la chambre du corps du robinet, et elles ne sont pas préjugées, ensuite, par les dilatations thermiques.

Les moyens pour appliquer une pression à la plaque fixe de la cartouche, capables de réaliser, au moins en partie, un effet hydraulique, peuvent être intégrés par des moyens de pression élastiques.

Dans certains modes de réalisation, un organe de support de la plaque fixe est prévu à l'intérieur de la cage de la cartouche, il comporte lesdits moyens de couplage complémentaires des moyens de couplage intérieurs du fond de la cage de la cartouche, et il comporte des moyens d'étanchéité agissant par rapport à la plaque fixe. De préférence, dans ce cas, il est encore prévu un moyen de fixation de la plaque fixe sur l'organe de support, disposé pour soutenir la pression des moyens d'étanchéité agissant entre la plaque fixe et l'organe de support.

En d'autres modes de réalisation, au contraire, les moyens de couplage complémentaires des moyens de couplage intérieurs du fond de la cage de la cartouche sont prévus directement sur la plaque fixe de la cartouche. Dans ce cas, aucun organe de support de la plaque fixe n'est nécessaire.

Les moyens de couplage prévus à l'intérieur du fond de la cage de la cartouche et ceux qui sont opérativement solidaires de la plaque fixe peuvent être constitués par des raccords engagés, avec des moyens radiaux d'étanchéité, dans des cavités complémentaires, ou bien ils peuvent être constitués par des manchons en matériau élastomérique avec des moyens élastiques de poussée, lesquels peuvent agir contre des moyens de couplage complémentaires simplement constitués par des surfaces substantiellement plates dans lesquelles ouvrent des passages pour l'eau.

Ces caractéristiques et autres et les avantages de l'objet de l'invention ressortiront plus clairement de la suivante description de certains modes de réalisation, donnés à titre d'exemples non limitatifs et représentés schématiquement dans les dessins annexés, dans lesquels:
Fig. 1 montre en section axiale et à une échelle agrandie un premier mode de réalisation d'une cartouche pour robinet mélangeur suivant l'invention, et elle montre aussi le fond de la chambre du corps du robinet, sur lequel la cartouche prend appui;
Fig. 2 montre d'une façon similaire de la figure 1 un deuxième mode de réalisation d'une cartouche pour robinet mélangeur suivant l'invention, et elle montre aussi le fond de la chambre du corps du robinet, sur lequel la cartouche prend appui;
Figs 3 à 6 montrent à une échelle quelque peu plus réduite la partie inférieure seulement de quatre cartouches suivant d'autres modes de réalisation de l'invention.

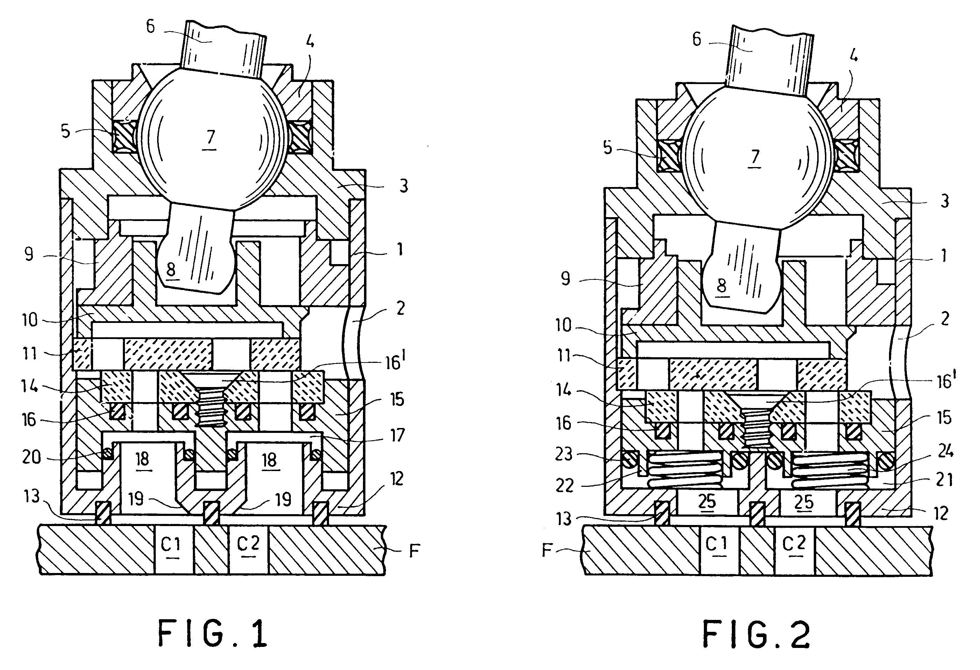

Faisant référence à la figure 1, une cartouche pour robinet mélangeur comporte une enveloppe ou cage 1, qui dans les exemples représentés est pourvue d'une ouverture 2 pour le débit de l'eau mélangé, et un couvercle 3 constituant un demi-coussinet pour une sphère d'articulation 7 d'un moyen de commande à levier 6 pourvu à son extrémité interne d'une clef de transmission 8. Une douille 4 fixée dans le couvercle 3 avec interposition d'une garniture 5 complète le coussinet pour la sphère d'articulation 7. Sous le couvercle 3 est monté un anneau de guidage 9 dans lequel peut glisser un coulisseau 10 cinématiquement couplé avec la clef 8. Le coulisseau 10 supporte une plaque mobile 11 en matériau dur ayant une conformation appropriée, dans ce cas constituée par des passages qui la traversent, pour effectuer, en coopérant avec une plaque fixe, le réglage du débit et du rapport de mélange du robinet.

Les parties décrites jusqu'ici sont d'un type connu, et il est aussi bien connu comme fonctionne ce mécanisme, lequel sous le contrôle du levier 6 permet de déplacer radialement et en rotation la plaque mobile 11 pour effectuer le réglage du robinet. On doit toutefois préciser que l'invention, quoique décrite aux fins d'un compréhension plus aisée en connection avec une forme spécifique de réalisation de ce mécanisme, pourrait également trouver application en des cartouches qui utilisent tout autre type de mécanisme pour déplacer une ou plusieurs plaques mobiles.

La cage 1 de la cartouche comporte un fond opérativement fixe 12. Dans le mode de réalisation représenté ce fond est en une pièce avec la cage 1 mais, bien entendu, il pourrait aussi être constructivement séparé et appliqué à la cage 1. Le fond 12 supporte vers l'extérieur une ou plusieurs garnitures 13 destinées à prendre appui contre le fond F de la chambre du corps du robinet, dans laquelle la cartouche doit être montée. Dans ce fond F sont pratiqués deux conduits C1, C2, pour l'arrivée de l'eau froide et chaude respectivement, ainsi que, le cas échéant, dans d'autres modes de réalisation, un troisième conduit pour emporter l'eau mélangée.

Dans les cartouches traditionnelles, les garnitures destinées à prendre appui contre le fond de la chambre du corps du robinet font saillie à l'intérieur du fond de la cage de la cartouche pour agir aussi contre la plaque fixe qui y est contenue; au contraire, les garnitures 13 sont installées positivement dans le fond 12, et elles agissent seulement entre ce fond 12 et le fond F de la chambre du corps du robinet. De ce fait leur compression, qui a lieu lorsque la cartouche est serrée (de toute façon connue) dans la chambre du corps du robinet, n'affecte aucunement le comportement de la plaque fixe de la cartouche.

Dans le mode de réalisation maintenant décrit, la plaque fixe 14 est disposée dans un organe de support 15 monté, déplaçable en direction axiale, dans la cage 1, et elle est fixée à cet organe de support moyennant une vis 16' et avec l'interposition de garnitures d'étanchéité 16. L'organe de support 15 comporte des sièges cylindriques 17 dans lesquelles engagent, faisant étanchéité moyennant des garnitures radiales 20, des raccords 18 faisant saillie vers l'intérieur du fond 12 de la cage de la cartouche. Les raccords 18 constituent les moyens de couplage du fond 12, et les sièges cylindriques 17 constituent les moyens de couplage complémentaires solidaires de la plaque fixe 14.

Le fonctionnement de ce dispositif est le suivant. Lorsque, à travers les conduits C1 et C2, une pression hydraulique arrive à la chambre du corps du robinet au-dessus du fond F et atteint les raccords 18, elle agit dans les sièges cylindriques 17 et repousse l'organe de support 15. Celui-ci pousse donc la plaque fixe 14 contre la plaque mobile 11 avec une force dépendant de la valeur de la pression hydraulique appliquée et de la section des sièges cylindriques 17. En proportionnant ladite section on peut obtenir que la pression par laquelle la plaque fixe 14 est poussée contre la plaque mobile 11 soit, en toute condition de fonctionnement, la force optimale. Dans cet exemple, la pression de contact entre les plaques de la cartouche est fournie par la pression hydraulique seulement.

Comme on le comprend, la cartouche, serrée dans la chambre du corps du robinet de la façon traditionnelle et par toute la force nécessaire pour comprimer efficacement les garnitures 13, établit une étanchéité efficace et ne peut pas se déplacer. Quoique les raccords 18 doivent, en général, satisfaire à certaines conditions géométriques, ils ne conditionnent pas la position des sorties des conduits C1 et C2; le cas échéant, un adaptement entre les positions différentes peut être réalisé facilement par des conformations appropriées du fond 12, comme par exemple par les biseaux 19 suivant la figure 1. De ce fait la cartouche peut être insérée soit en un robinet spécial, projeté toutefois d'une façon traditionnelle, soit aussi en remplacement d'une cartouche traditionnelle, dans un robinet qui à l'origine était pourvu d'une cartouche n'ayant pas d'effet hydraulique. La correspondence exacte entre les raccords 18 et les sièges cylindriques 17 peut être atteinte, dans la fabrication (par exemple par moulage de matières plastiques) de la cage 1 ou du fond 12 de la cartouche et de l'organe de support 15, bien plus aisément que dans l'usinage de sièges pratiqués dans le fond de la chambre du corps d'un robinet, et ensuite elle n'est pas affectée par des dilatations thermiques différentes.

Dans les modes de réalisation montrés dans les figures 2 à 6, les mêmes chiffres de référence sont employées pour indiquer des parties égales ou, en général, correspondantes aux parties décrites jusqu'ici.

Faisant référence à la figure 2, on remarque que dans ce mode de réalisation le fond 12 de la cartouche comporte vers l'intérieur des sièges cylindriques 21, constituant des moyens de couplage, tandis que l'organe de support 15 comporte des moyens de couplage complémentaires sous forme de raccords 22 faisant saillie, lesquels pénètrent dans les sièges cylindriques 21 et y font étanchéité moyennant des garnitures radiales 23. Dans ce cas la présence des sièges cylindriques 21 autorise la réalisation très aisée, en des positions appropriées dans le fond 12 de la cartouche, d'ouvertures 25 destinées à communiquer avec les conduits d'arrivée C1 et C2. De plus, dans ce mode de réalisation on a prévu des ressorts 24 qui agissent entre le fond 12 de la cartouche et l'organe de support 15 pour appliquer à la plaque fixe 14 une certaine précharge indépendante de la pression hydraulique; cette précharge peut être à propos spécialement pour le fonctionnement à une pression réduite. A part ce dernier détail, le fonctionnement de la cartouche suivant la figure 2 est identique de celui qu'on a décrit à propos du mode de réalisation précédent.

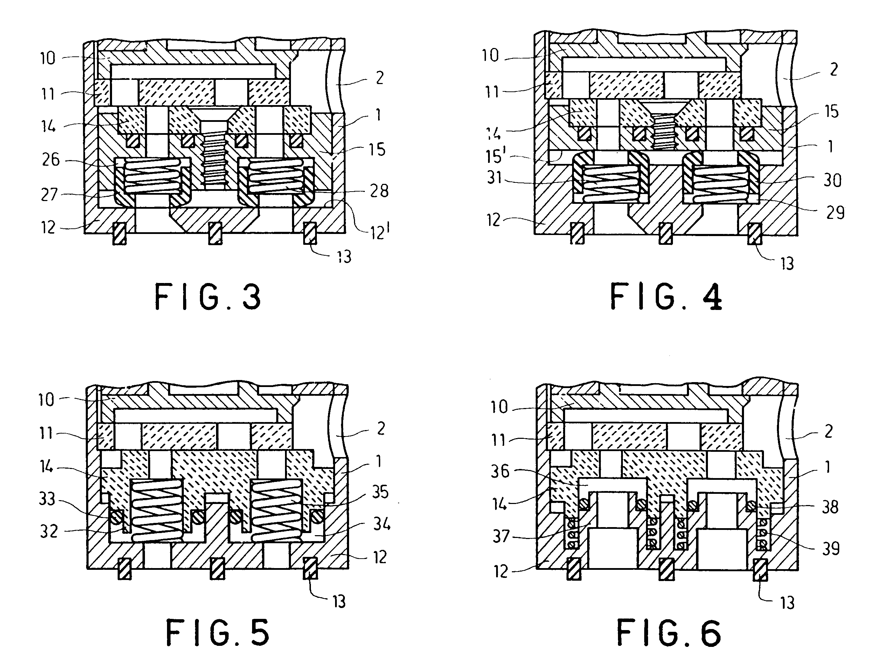

Les figures 3 et 4 montrent deux modes de réalisation dans lesquels les connections hydrauliques entre le fond de la cartouche et l'organe de support pour la plaque fixe sont constitués par des manchons en matériau élastomérique chargés par des ressorts. L'avantage particulier de l'emploi de ces raccords consiste en ce qu'ils peuvent coopérer avec des simples surfaces plates, et donc ils ne posent aucune exigence de respecter des tolérances de position pour les passages de l'eau.

Suivant la figure 3, l'organe de support 15 comporte des sièges cylindriques 26 dans lesquels sont insérés de façon étanche des manchons 27 en matériau élastomérique (les ainsi-dits delex), pourvus de ressorts 28. Dans ce cas, le moyen de couplage complémentaire présenté vers l'intérieur par le fond 12 de la cartouche peut être une simple surface plate 12', contre laquelle agissent les extrémités extérieures des manchons 27 en matériau élastomérique.

Suivant la figure 4, au contraire, c'est le fond 12 de la cartouche qui comporte des sièges cylindriques 29 dans lesquels sont insérés de façon étanche des manchons 30 en matériau élastomérique, pourvus de ressorts 31. Dans ce cas, c'est l'organe de support 15 qui peut présenter, comme moyen de couplage complémentaire, une simple surface plate 15', contre laquelle agissent les extrémités des manchons 30 en matériau élastomérique.

Dans les formes de réalisation suivant les figures 3 et 4, les ressorts 28 ou 31 établissant l'étanchéité frontale des manchons de raccord 27 ou 30 en matériau élastomérique appliquent aussi une force de précharge à la plaque fixe 14, en addition à la force appliquée par la pression hydraulique agissant dans les sièges 26 ou 29 où sont insérés les manchons en matériau élastomérique.

Enfin, les figures 5 et 6 montrent deux modes de réalisation dans lesquels il n'y a aucun organe de support pour la plaque fixe 14, laquelle comporte elle-même des moyens de couplage en une pièce, coopérant avec les moyens de couplage présentés vers l'intérieur par le fond 12 de la cartouche.

Suivant la figure 5, de la surface de la plaque fixe 14 faisant face au fond 12 de la cartouche font saillie des raccords 32 qui engagent, faisant étanchéité moyennant des garnitures radiales 33, en des sièges cylindriques 34 présentées par le fond 12 de la cartouche. Le cas échéant, des ressorts 35 peuvent être insérés entre le fond 12 de la cartouche et la plaque fixe 14.

Suivant la figure 6, au contraire, la plaque fixe 14 comporte des sièges cylindriques 36 et le fond 12 de la cartouche présente vers l'intérieur des raccords en saillie 37 qui engagent dans les sièges cylindriques 36 y faisant étanchéité moyennant des garnitures radiales 38. Aussi dans ce cas, si nécessaire, des ressorts 39 peuvent être insérés entre le fond 12 et la plaque fixe 14, ou bien entre cette dernière et les raccords 37.

Les sièges cylindriques 36 de la plaque fixe 14 peuvent aussi être employés pour y insérer un manchon de matériau élastomérique identique au manchon 27 de la figure 3, lui aussi pourvu d'un ressort de poussée, et dans ce cas les moyens de couplage complémentaires du fond 12 de la cage peuvent avoir la forme de simples surfaces plates comme la surface 12' suivant la figure 3.

Dans les formes de réalisation suivant les figures 5 et 6 on a l'avantage d'éviter l'addition d'un organe de support 15 pour la plaque fixe 14, ainsi que des garnitures 16 et du moyen de connexion 17. Bien entendu, à cet avantage s'oppose une plus grande complication de la forme de la plaque fixe 14. Le choix entre les différentes formes de réalisation possibles doit être fait dans chaque cas particulier en considérant les exigences et les particularités de chaque application.

En tous cas, l'organe de support 15, quand il existe, ou bien la plaque fixe 14 elle-même, quand il n'y a pas d'organe de support, forme un fond intérieur de la cage, réalisant un effet hydraulique.

## Revendications

1. Cartouche destinée à être insérée dans une chambre du corps d'un robinet hydraulique mélangeur pour eau chaude et froide, cette cartouche comprenant une cage (1), des moyens d'étanchéité (13) prévus pour agir vers le fond (F) de la chambre du corps du robinet, une plaque fixe (14) en matériau dur montée en une position opérativement fixe dans la cage (1), au moins une plaque mobile (11) en matérieau dur montée en position opérativement réglable dans la cage (1), en contact avec ladite plaque fixe (14), lesdites plaques (11,14) ayant des conformations mutuellement coopérant pour régler le débit du robinet et le rapport de mélange entre l'eau chaude et froide, et des moyens de commande (6-10) destinés à effectuer le déplacement de ladite plaque mobile (11) pour permettre l'execution des réglages, caractérisée en ce que la cage (1) de la cartouche comprend un fond opérativement fixe (12), lequel comporte vers l'extérieur des moyens d'étanchéité (13) destinés à agir entre le fond (12) de la cartouche et le fond (F) de la chambre du corps du robinet comme conséquence du serrage de la cartouche dans ladite chambre, et comporte vers l'intérieur des moyens de couplage (18; 21; 12'; 29-31; 34; 37) coopérant avec des moyens de couplage complémentaires (17; 22; 26-28; 15'; 32; 36), opérativement solidaires de la plaque fixe (14) de la cartouche de manière à établir le couplage hydraulique entre des conduits (C1,C2) d'alimentation prévus dans le fond (F) de la chambre du corps du robinet et lesdites conformations de la plaque fixe (14); que la plaque fixe (14) est montée dans la cage (1) de la cartouche avec une possibilité de déplacement en direction perpendiculaire à sa surface de contact avec la plaque mobile (11); et que des moyens sont prévus pour appliquer à la plaque fixe (14) une pression de contact par rapport à la plaque mobile (11) ces moyens (17; 22; 26; 30; 32; 36; 24; 28; 31; 35; 39) étant d'un type capable de réaliser, au moins en partie, un effet hydraulique.

2. Cartouche pour robinet suivant la revendication 1, caractérisée en ce que lesdits moyens (17; 22; 26; 30; 32; 36) pour appliquer une pression à la plaque fixe (14) de la cartouche, capables de réaliser, au moins en partie, un effet hydraulique, sont intégrés par des moyens de pression élastiques (24; 28; 31; 35; 39).

3. Cartouche pour robinet suivant la revendication 1, caractérisée en ce qu'un organe déplaçable (15) de support de la plaque fixe (14) est prévu à l'intérieur de la cage (1) de la cartouche, que cet organe de support (15) comporte lesdits moyens de couplage (17; 22; 26-28; 15') complémentaires des moyens de couplage intérieurs du fond (12) de la cage de la cartouche, et qu'il comporte des moyens d'étanchéité (16) agissant par rapport à la plaque fixe (14).

4. Cartouche pour robinet suivant la revendication 3, caractérisée en ce qu'il est prévu un moyen (16') de fixation de la plaque fixe (14) sur ledit organe de support (15), disposé pour soutenir la pression des moyens d'étanchéité (16) agissant entre la plaque fixe (14) et l'organe de support (15).

5. Cartouche pour robinet suivant la revendication 1, caractérisée en ce que les moyens de couplage (32; 36) complémentaires des moyens de couplage intérieurs du fond (12) de la cage (1) de la cartouche sont prévus directement sur la plaque fixe (14) de la cartouche.

6. Cartouche pour robinet suivant la revendication 1, caractérisée en ce que les moyens de couplage prévus à l'intérieur du fond (12) de la cage (1) de la cartouche et les moyens de couplage qui sont opérativement solidaires de la plaque fixe (14) sont constitués par des raccords en saillie (18; 22; 32; 37) et par des sièges cylindriques (17; 21; 34; 36) complémentaires, avec des moyens d'étanchéité (20; 23; 33; 38) disposés pour agir en direction radiale entre les surfaces extérieures desdits raccords en saillie et les surfaces intérieures desdits sièges cylindriques.

7. Cartouche pour robinet suivant la revendication 1, caractérisée en ce que lesdits moyens de couplage présentés à l'intérieur par le fond (12) de la cage (1) de la cartouche et les moyens de couplage opérativement solidaires de la plaque fixe (14) sont constitués par des manchons (27; 30) en matériau élastomérique pourvus de moyens élastiques de poussée (28; 31), disposés pour agir contre des moyens de couplage complémentaires (12'; 15') constitués par des surfaces substantiellement plates dans lesquelles ouvrent des passages pour l'eau.

8. Cartouche pour robinet suivant la revendication 7, caractérisée en ce que lesdits manchons (27) de matériau élastomérique sont insérés en des sièges cylindriques (36) formés directement dans la plaque fixe (14).

9. Cartouche pour robinet suivant la revendication 2, caractérisée en ce que lesdits moyens de pression élastiques sont constitués par des ressorts en hélicoïd (24; 28; 31; 35; 39) disposés pour agir entre le fond (12) de la cage (1) de la cartouche et la plaque fixe (14).

## Claims

1. A cartridge intended to be inserted into a body chamber of a hydraulic mixer valve for hot and cold water, this cartridge comprising a cage (1), seal means (13) on the cage for acting against the bottom (F) of the valve body chamber, a fixed plate (14) of hard material mounted in operatively fixed position in the cage (1), at least one movable plate (11) of hard material mounted in operatively controllable position in the cage (1) and contacting said fixed plate (14), said plates (11,14) having mutually cooperating conformations intended to control the flow rate delivered by the valve and the mixing ratio between hot and cold water, and operating means (6-10) intended to effect the displacement of said movable plate (11) for allowing executing the controls, characterized in that the cartridge cage (1) comprises an operatively fixed bottom (12) which is provided at the outside with seal means (13) intended to operate between the cartridge bottom (12) and the bottom (F) of the valve body chamber as a consequence of the tightening of the cartridge within said chamber, and is provided at the inside with coupling means (18; 21; 12'; 29-31; 34; 37) co-operating with complementary coupling means (17; 22; 26-28; 15'; 32; 36) operatively solid with the fixed plate (14) of the cartridge so as to establish a hydraulic connection between the supply passages (C1,C2) foreseen in the bottom (F) of the chamber of the valve body and said conformations of the fixed plate (14); that the fixed plate (14) is mounted within the cartridge cage (1) with a possibility of displacement along a direction perpendicular to its surface contacting the movable plate (11); and that means are provided for applying to the fixed plate (14) a contact pressure against the movable plate (11), these means (17; 22; 26; 30; 36; 24; 28; 31; 35; 39) being of a type capable of realizing, at least in part, a hydraulic effect.

2. A valve cartridge as set forth in Claim 1, characterized in that said means (17; 22; 26; 30; 32; 36) for applying to the fixed plate (14) of the cartridge a contact pressure, capable of realizing, at least in part, a hydraulic effect are assisted by elastic pressure means (24; 28; 31; 35; 39).

3. A valve cartridge as set forth in Claim 1, characterized in that within the cartridge cage (1) there is slidingly mounted a supporting member (15) for the fixed plate (14), that this supporting member (15) carries said coupling means (17; 22; 26-28; 15') complementary to the internal coupling means of the bottom (12) of the cartridge cage, and that it has seal means (16) acting against the fixed plate (14).

4. A valve cartridge as set forth in Claim 3, characterized in that it further comprises a means for fixing (16') the fixed plate (14) to the supporting member (15), said means being capable of sustaining the pressure of the seal means (16) inserted between the fixed plate (14) and the supporting member (15).

5. A valve cartridge as set forth in Claim 1, characterized in that the coupling means (32; 36) complementary to the internal coupling means of the bottom (12) of the cartridge cage (1) are provided directly on the fixed plate (14) of the cartridge.

6. A valve cartridge as set forth in Claim 1, characterized in that said coupling means provided inside the bottom (12) of the cartridge cage (1) and the coupling means which are operatively solid with the fixed plate (14) are embodied by projecting connections (18; 22; 32; 37) and by complementary cylindrical seats (17; 21; 34; 36), with seal means (20; 23; 33; 38) provided for acting in radial direction between the outer surfaces of said projecting connections and the inner surfaces of said cylindrical seats.

7. A valve cartridge as set forth in Claim 1, characterized in that said coupling means provided inside the bottom (12) of the cartridge cage (1) and the coupling means operatively solid with the fixed plate (14) are embodied by sleeves (27; 30) of elastomeric material having elastic biasing means (28; 31), provided for operating against complementary coupling means (12'; 15') formed by substantially plane surfaces in which the passages for the water open.

8. A valve cartridge as set forth in Claim 7, characterized in that said sleeves (27) of elastomeric material are seated into cylindrical seats (36) directly formed in the fixed plate (14).

9. A valve cartridge as set forth in Claim 2, characterized in that said elastic pressure means are embodied by helical springs (24; 28; 31; 35; 39) provided for operating between the bottom (12) of the cartridge cage (1) and the fixed plate (14).

## Patentansprüche

1. Patrone, die in eine Kammer des Gehäuses eines hydraulischen Warm- und Kaltwassermischers einsetzbar ist, mit einer Hülse (1), mit Dichtungsmitteln (13), die dazu bestimmt sind, auf den Boden (F) der Kammer des Mischergehäuses zu wirken, mit einer festen, in der Hülse (1) in fester Arbeitsstellung eingebauten Platte (14) aus hartem Material, mit wenigstens einer beweglichen, in der Hülse (1) in einstellbarer Arbeitsstellung, in Berührung mit der festen Platte (14) eingebauten Platte (11) aus hartem Material, wobei die Platten (11, 14) zusammenwirkende Gebilde zum Einstellen des Mischverhältnisses zwischen das warme und kalte Wasser und der Menge des aus dem Wassermischer auslaufenden Wasserstroms aufweisen, und mit Steuermitteln (6-10), die dazu bestimmt sind, die Verschiebung der beweglichen Platte (11) herbeizuführen, damit die Einstellungen vorgenommen werden können, dadurch gekennzeichnet, dass die Patronenhülse (1) einen Boden (12) mit fester Arbeitsstellung umfasst, der an der Aussenseite Dichtungsmittel (13), die dazu bestimmt sind, infolge des Einspannens der Patrone in der Kammer des Mischergehäuses zwischen dem Patronenboden (12) und dem Boden (F) der Kammer zu wirken, und an der Innenseite Verbindungsmittel (18; 21; 12'; 29-31; 34; 37) aufweist, die mit an der festen Patronenplatte (14) in Arbeitsstellung befestigten Gegenverbindungsmitteln (17; 22; 36-28; 15'; 32; 36) zusammenwirken, um zwischen den im Boden (F) der Kammer des Mischergehäuses vorgesehenen Zuleitungen (C1,C2) und den Gebilden der festen Platte (14) die hydraulische Verbindung herzustellen, dass die feste Platte (14) mit der Möglichkeit einer Verschiebung in zur eigenen Berührungsfläche mit der beweglichen Platte (11) rechtwinkliger Richtung in der Patronenhülse (1) eingebaut ist, und dass Mittel zur Beaufschlagung der festen Platte (14) mit einem auf die Fläche der beweglichen Platte (11) auszuübenden Druck vorgesehen sind, wobei diese Mittel (17; 22; 26; 30; 32; 36; 24; 28; 31; 35; 39) dazu geeignet sind, wenigstens teilweise eine hydraulische Wirkung herbeizuführen.

2. Patrone für einen Wassermischer nach Anspruch 1, dadurch gekennzeichnet, dass die Mittel (17; 22; 26; 30; 32; 36), die dazu bestimmt sind, die feste Platte (14) mit einem Druck zu beaufschlagen und wenigstens teilweise eine hydraulische Wirkung herbeizuführen, durch federnde Druckmittel (24; 28; 31; 35; 39) integriert sind.

3. Patrone für einen Wassermischer nach Anspruch 1, dadurch gekennzeichnet, dass im Innenraum der Patronenhülse (1) ein verschiebbares Tragelement (15) für die feste Platte (14) eingebaut ist, dass dieses Tragelement (15) sich mit den im Boden (12) der Patronenhülse vorgesehenen Verbindungsmitteln ergänzende Verbindungmittel (17; 22; 26-28, 15') sowie gegenüber der festen Platte (14) wirkende Dichtungsmittel (16) aufweist.

4. Patrone für einen Wassermischer nach Anspruch 3, dadurch gekennzeichnet, dass dieselbe ein Mittel (16') zur Befestigung der festen Platte (14) am Tragelement (15) umfasst, das dazu bestimmt ist, den durch die zwischen der festen Platte (14) und dem Tragelement (15) wirkenden Dichtungsmittel (16) ausgeübten Druck aufzunehmen.

5. Patrone für einen Wassermischer nach Anspruch 1, dadurch gekennzeichnet, dass die sich mit den im Boden (12) der Patronenhülse (1) vorgesehenen Verbindungsmitteln ergänzeden Verbindungsmittel (32; 36) direkt an der festen Patronenplatte (14) angeordnet sind.

6. Patrone für einen Wassermischer nach Anspruch 1, dadurch gekennzeichnet, dass die im Boden (12) der Patronenhülse (1) vorgesehenen Verbindungsmittel und die in Arbeitsstellung an der festen Platte (14) befestigten Verbindungsmittel aus vorstehenden Anschlussstücken (18; 22; 32; 37) bestehen, die in entsprechende, sich damit ergänzende zylinderförmige Aufnahmen (17; 21; 34; 36) eingreifen, und zwar mit Dichtungsmitteln (20; 23; 33; 38), die dazu bestimmt sind, in radialer Richtung zwischen den Aussenflächen der vorstehenden Anschlussstücke und den Innenflächen der zylinderförmigen Aufnahmen zu wirken.

7. Patrone für einen Wassermischer nach Anspruch 1, dadurch gekennzeichnet, dass die im Boden (12) der Patronenhülse (1) vorgesehenen Verbindungsmittel und die in Arbeitsstellung an der festen Platte (14) befestigten Verbindungsmittel aus Muffen (27; 30) aus gummielastischem Werkstoff bestehen, die mit federnden Druckmitteln (28; 31) versehen sind, die dazu bestimmt sind, gegen sich damit ergänzende Verbindungsmittel (12'; 15') zu wirken, die aus im wesentlichen ebenen Flächen bestehen, in denen sich Durchlässe für das Wasser bilden.

8. Patrone für einen Wassermischer nach Anspruch 7, dadurch gekennzeichnet, dass die Muffen (27) aus gummielastischem Werkstoff in direkt in der festen Platte (14) ausgebildeten, zylinderförmigen Aufnahmen (36) eingesetzt sind.

9. Patrone für einen Wassermischer nach Anspruch 2, dadurch gekennzeichnet, dass die federnden Druckmittel aus Schraubenfedern (24; 28; 31; 35; 39) bestehen, die dazu bestimmt sind, zwischen dem Boden (12) der Patronenhülse (1) und der festen Platte (14) zu wirken.
